# DEMANDE DE BREVET EUROPEEN

(11) **EP 1 930 566 A1**
(43) Date de publication de la demande: **11.06.2008**
(21) Numéro de dépôt: 07301568.7
(22) Date de dépôt: 22.11.2007
(51) Int. Cl.: F02B 37/00, F16L 23/02, F16L 23/032, F16B 5/02, F01N 7/18

(54) **Dispositif de fixation de deux organes mécaniques**

(30) Priorité: 07.12.2006 FR 0655361
(71) Demandeur: RENAULT S.A.S., 92100 Boulogne Billancourt (FR)
(72) Inventeur: Gratian, Jean-Louis, 95200 Sarcelles (FR)

(57) **Abrégé**

La présente invention propose un dispositif de fixation de deux organes (10, 14) mécaniques d'un véhicule automobile. Selon l'invention, une première bride (18) fixe par rapport au premier organe (10) présente au moins une première encoche (28, 30) traversant la première bride (18) dans son épaisseur et débouchant sur un bord (32) de ladite première bride (18), et comprend au moins un premier goujon (38). Une deuxième bride (20) fixe par rapport au deuxième organe (14) présente au moins une seconde encoche (42) traversant la première bride (20) dans son épaisseur et débouchant sur un bord (44) de ladite première bride (20), et comprend au moins un second goujon (50, 52), ladite seconde encoche (42) étant positionnée en regard du premier goujon (38) de la première bride (18), et ledit second goujon (50, 52) étant positionné en regard de la première encoche (28, 30) de la première bride (18).

## Description

La présente invention concerne la fixation d'organes de moteurs à combustion interne de véhicules.

Plus particulièrement, l'invention concerne la fixation du turbocompresseur au collecteur d'échappement d'un moteur à combustion interne.

La publication EP 1 270 891 expose un dispositif de fixation du turbocompresseur sur le collecteur d'échappement d'un moteur. La bride du turbocompresseur est maintenue contre la bride du collecteur par des goujons vissés dans la bride du turbocompresseur perpendiculairement à la face de la bride et traversant de part et d'autre le collecteur d'échappement dans des manchons.

Pour des impératifs économiques, le montage des véhicules et par conséquent celui de ces organes du moteur, doit être le plus rapide et le plus simple possible pour l'opérateur de montage.

Cependant, l'implantation des éléments de fixation selon la publication précédente reste compliquée, car elle impose des usinages traversant les conduits d'échappement du collecteur, le vissage de trois goujons et le maintien du turbocompresseur par l'opérateur de montage durant la phase de vissage.

Le but de l'invention, est de proposer un dispositif de fixation de deux organes mécaniques permettant un montage plus rapide et plus aisé pour l'opérateur de montage.

Dans ce but, l'invention propose un dispositif de fixation de deux organes mécaniques d'un véhicule automobile comprenant une première bride fixe par rapport au premier organe, et qui présente au moins une première encoche traversant la première bride dans son épaisseur et débouchant sur un bord de ladite première bride, et qui comprend au moins un premier goujon. Le dispositif comprend aussi une deuxième bride fixe par rapport au deuxième organe, et qui présente au moins une seconde encoche traversant la deuxième bride dans son épaisseur et débouchant sur un bord de ladite deuxième bride, et qui comprend au moins un second goujon, ladite seconde encoche étant positionnée en regard du premier goujon de la première bride, et ledit second goujon étant positionné en regard de la première encoche de la première bride.

Selon d'autres caractéristiques de l'invention:
- la première bride peut présenter deux premières encoches et un premier goujon, et la deuxième bride peut présenter deux seconds goujons et une seconde encoche, le premier goujon étant positionné en regard de la seconde encoche, et les seconds goujons filetés étant positionnés en regard des premières encoches;
- la première bride peut être positionnée horizontalement en regard de la partie inférieure du moteur ;
- la première bride peut présenter une portion qui s'étend horizontalement au-delà du premier organe du coté opposé au moteur.
- la ou les premières encoches peuvent être situées sur la portion de la première bride qui s'étend au-delà du premier organe ;
- la ou les premières encoches et la ou les secondes encoches peuvent être de forme oblongue, délimitées par deux parois sensiblement parallèles reliées l'une à l'autre par un fond semi circulaire;
- la ou les premières encoches peuvent déboucher sur le bord de la première bride du coté opposé au moteur ;
- la ou les secondes encoches peuvent déboucher sur le bord de deuxième bride en regard du moteur.

L'invention propose aussi un procédé de montage d'un turbocompresseur sur un collecteur d'échappement à l'aide d'un tel dispositif de fixation comportant les étapes suivantes :
- montage du collecteur d'échappement sur la face d'échappement de la culasse du moteur ;
- positionnement d'un joint sur la face d'appui de la bride d'entrée du turbocompresseur;
- positionnement des écrous sur les goujons filetés de manière à ce que la distance restante entre la face d'appui de la bride de sortie du collecteur, ou de la bride d'entrée du turbocompresseur, et la face de l'écrou en regard de la face d'appui soit supérieure à l'épaisseur de la bride d'entrée du turbocompresseur ou, respectivement, de la bride de sortie du collecteur;
- positionnement du turbocompresseur de manière à introduire simultanément la portion des goujons située entre les écrous et la face d'appui des brides, dans les encoches;
- serrage des écrous pour assurer la fixation de la bride d'entrée du turbocompresseur contre la bride de sortie du collecteur d'échappement.

L'invention sera désormais décrite dans un exemple en référence aux dessins annexés suivants :
- la figure 1 est une vue en perspective du dispositif de fixation de l'invention;
- la figure 2 est une vue en coupe selon le plan II-II du dispositif de la figure 1; et
- la figure 3 est une vue en coupe selon le plan III-III du dispositif de la figure 1.

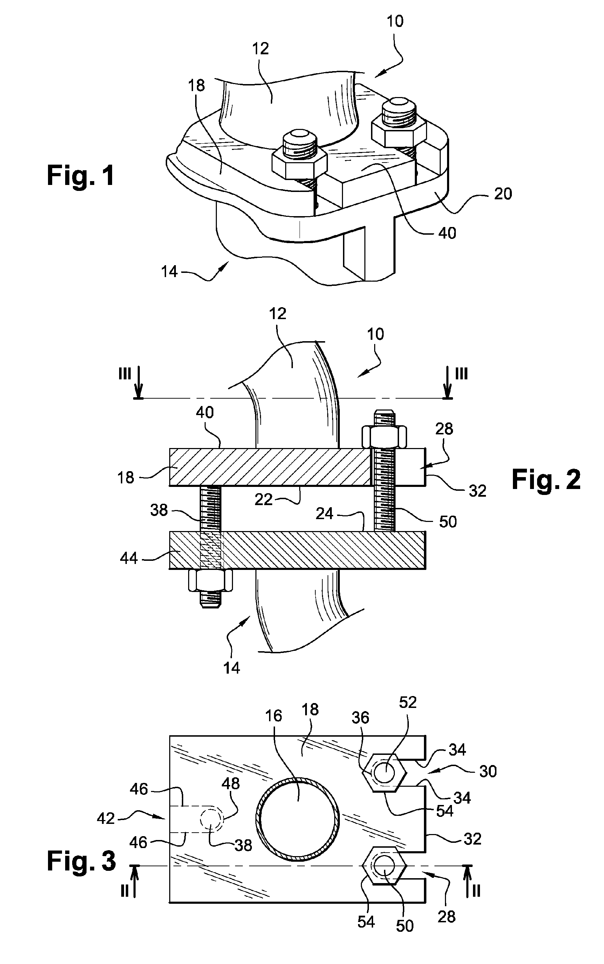

En référence aux figures 1 à 3, un moteur d'un véhicule comprend une culasse (non représentée sur les figures) sur laquelle est fixé un collecteur d'échappement 10.

Le collecteur d'échappement 10 récupère les gaz d'échappement des différentes chambres de combustion du moteur, et les dirige vers la ligne d'échappement. Pour cela, le collecteur 10 comporte plusieurs tubulures d'échappement 12 dont les orifices d'entrée débouchent chacun en amont sur une bride de fixation du collecteur 10 sur la culasse. Les orifices d'entrées correspondent aux orifices de sortie de la face d'échappement de la culasse. Les tubulures 12 se rejoignent en aval du collecteur 10 pour déboucher sur un unique orifice de sortie 16 situé sur une bride de sortie 18 du collecteur 10. Le collecteur d'échappement 10 récupère ainsi les gaz d'échappement aux différents orifices d'entrée, et les dirige vers un unique orifice de sortie 16.

Un turbocompresseur 14 comportant une bride d'entrée 20, est monté à la sortie du collecteur d'échappement 10, en fixant la face d'appui 24 de la bride d'entrée 20 du turbocompresseur 14 en appui contre la face d'appui 22 de la bride de sortie 18 du collecteur d'échappement 10. Dans cet exemple, le turbocompresseur 14 est fixé sous le collecteur d'échappement 10, la face d'appui 22 de la bride de sortie 18 du collecteur étant positionnée à l'horizontale et en direction de la partie inférieure de moteur.

Les faces d'appui 22 et 24 des brides de sortie 18 du collecteur 10 et d'entrée 20 du turbocompresseur 14 sont sensiblement planes, et un joint est placé entre ces faces d'appui 22 et 24, de manière à assurer l'étanchéité entre ces deux éléments et éviter les fuite de gaz d'échappement.

La bride de sortie 18 du collecteur 10 a la forme d'une plaque qui s'étend horizontalement autour de l'orifice de sortie 16 du collecteur 10. La bride de sortie 18 du collecteur 10 s'étend au-delà des tubulures 12 du collecteur 10 du coté opposé au moteur, de manière à laisser une portion 40 de sa face supérieure , opposée à la face d'appui 22, accessible aux outils de montage comme par exemple des visseuses. La bride de sortie 18 du collecteur 10 présente dans cette portion 40, deux premières encoches 28, 30 de forme oblongue et traversant la bride 18 dans son épaisseur. Ces premières encoches 28, 30 sont symétriquement situées sur la bride 18 par rapport à un plan verticale, perpendiculaire à la face d'échappement de la culasse, et comprenant l'axe principale de l'orifice de sortie 16 du collecteur 10. Lesdites premières encoches 28,30 débouchent sur le bord 32 de la bride 18 du coté opposé au moteur, et sont délimitées par deux parois sensiblement parallèles 34 reliées l'une à l'autre par un fond semi circulaire 36.

Un premier goujon fileté 38 est fixé à la bride de sortie 18 du collecteur 10, perpendiculairement à la face d'appui 22 de cette dernière et dans le plan verticale, perpendiculaire à la face d'échappement de la culasse, comprenant l'axe principal de l'orifice de sortie 16 du collecteur 10. La longueur du premier goujon 38 est supérieure à l'épaisseur de la bride d'entrée 20 du turbocompresseur 14.

La bride d'entrée 20 du turbocompresseur 14 a la forme d'une plaque complémentaire à la bride de sortie 18 du collecteur 10, et qui s'étend horizontalement autour de l'orifice d'entrée 26 du turbocompresseur 14. La bride d'entrée 20 présente une troisième encoche 42 de forme oblongue, et traversant la bride 20 dans son épaisseur. Cette troisième encoche 42 est positionnée sur la bride d'entrée 20 du turbocompresseur 14 en regard du premier goujon fileté 38 qui est fixé sur la bride de sortie 18 du collecteur 10. La troisième encoche 42 débouche sur le bord 44 de la bride d'entrée 20 du coté du moteur, et est délimitée par deux parois sensiblement parallèles 46 reliées l'une à l'autre par un fond semi circulaire 48. La largeur de la troisième encoche 42 est supérieure au diamètre du premier goujon fileté 38 de manière à ce que ce dernier puisse s'introduire dans cette troisième encoche 42.

Un second et un troisième goujons filetés 50 et 52 sont fixés à la bride d'entrée 20 du turbocompresseur 14, perpendiculairement à la face d'appui 24 de cette dernière et en regard des deux premières encoches 28 et 30 de la bride de sortie 18 du collecteur d'échappement 10. La longueur des second et troisième goujons 50 et 52 est supérieure à l'épaisseur de la bride de sortie 18 du collecteur 10, et leur diamètre est inférieur à la largeur des encoches 28 et 30 de la bride de sortie 18 du collecteur 10 de manière à ce que les second et troisième goujons filetés 50 et 52 puissent s'introduire dans ces deux premières encoches 28, 30.

Le fonctionnement du dispositif est le suivant :

Lors du montage du moteur, le collecteur d'échappement 10 est fixé sur la face d'échappement de la culasse du moteur. Un opérateur monte alors le turbocompresseur 14 sur le collecteur d'échappement 10.

L'opérateur dispose le joint sur la face d'appui 24 de la bride d'entrée 20 du turbocompresseur 14, et positionne les écrous 54 sur les second et troisième goujons filetés 50 et 52 de la bride d'entrée 20 du turbocompresseur 14, ainsi que sur le premier goujon fileté 38 de la bride de sortie 18 du collecteur d'échappement 10. Les écrous 54 sont vissés sur les goujons filetés 38, 50 et 52, suffisamment pour que leur filetage soit totalement engagé sur celui des goujons 38, 50 et 52, et de manière à ce que la distance restante entre la face d'appui de la bride de sortie 18 du collecteur 10, ou de la bride d'entrée 20 du turbocompresseur 14, et la face de l'écrou en regard de la face d'appui soit supérieure à l'épaisseur de la bride d'entrée 20 du turbocompresseur 14 ou, respectivement, de la bride de sortie 18 du collecteur 10.

L'opérateur peut alors mettre en place le turbocompresseur 14 sur le collecteur d'échappement 10 en déplaçant le turbocompresseur 14 en direction du moteur, et en maintenant les faces d'appui 22, 24 parallèles entre elles. De cette manière, il introduit simultanément la portion du premier goujon 38 de la bride de sortie 18 du collecteur 10, située entre l'écrou 42 et la face d'appui de la bride, dans la troisième encoche 42 de la bride d'entrée 20 du turbocompresseur 14, et celle des second et troisièmes goujons de la bride d'entrée 20 du turbocompresseur 14 dans les deux premières encoches 28 et 30 de la bride de sortie 18 du collecteur d'échappement 10.

Les écrous 54 sont alors situés sur les faces opposées aux faces d'appui 22 et 24 des brides 18 et 20. L'opérateur peut alors relâcher le turbocompresseur 14 qui est maintenu en suspension par les écrous 54 sous le collecteur d'échappement 10. Il peut donc effectuer le serrage des écrous 54 sans avoir besoin de supporter le turbocompresseur 14. Le serrage entraîne alors le maintien de la bride d'entrée 20 du turbocompresseur 14 contre la bride de sortie 18 du collecteur d'échappement 10 afin d'assurer l'étanchéité nécessaire entre ces deux éléments.

Un des avantages de l'invention est de permettre un montage rapide du turbocompresseur 14 sur le collecteur d'échappement 10 par un seul opérateur, sans que celui-ci ne supporte la totalité du poids du turbocompresseur 14 pendant son vissage sur le collecteur 10.

## Revendications

1. Dispositif de fixation de deux organes (10, 14) mécaniques d'un véhicule automobile, comprenant une première bride (18) fixe par rapport au premier organe (10), une deuxième bride (20) fixe par rapport au deuxième organe (14), et au moins deux goujons de fixation filetés (38, 50, 52) pouvant accueillir des écrous (54), **caractérisé en ce que** la première bride (18) présente au moins une première encoche (28, 30) traversant la première bride (18) dans son épaisseur et débouchant sur un bord (32) de ladite première bride (18), et comprend au moins un premier goujon fileté (38) fixé à la première bride (18), et **en ce que** la deuxième bride (20) présente au moins une seconde encoche (42) traversant la deuxième bride (20) dans son épaisseur et débouchant sur un bord (44) de ladite deuxième bride (20), et comprend au moins un second goujon fileté (50, 52) fixé à la deuxième bride (20), ladite seconde encoche (42) étant positionnée en regard du premier goujon (38) de la première bride (18), et ledit second goujon (50, 52) étant positionné en regard de la première encoche (28, 30) de la première bride (18).

2. Dispositif de fixation selon la revendication précédente, **caractérisé en ce que** la première bride (18) présente deux premières encoches (28, 30) et un premier goujon (38), et la deuxième bride (20) présente deux seconds goujons (50, 52) et une seconde encoche (42), le premier goujon (38) étant positionné en regard de la seconde encoche (42), et les seconds goujons filetés (50, 52) étant positionnés en regard des premières encoches (28, 30).

3. Dispositif de fixation selon une des revendications précédentes, **caractérisé en ce que** la première bride (18) est positionnée horizontalement en regard de la partie inférieure du moteur.

4. Dispositif de fixation selon une des revendications précédentes, **caractérisé en ce que** la première bride (18) présente une portion (40) qui s'étend horizontalement au-delà du premier organe (10) du coté opposé au moteur.

5. Dispositif de fixation selon la revendication 4, **caractérisé en ce que** la ou les premières encoches (28, 30) sont situées sur la portion (40) de la première bride (18) qui s'étend au-delà du premier organe (10).

6. Dispositif de fixation selon une des revendications précédentes, **caractérisé en ce que** la ou les premières encoches (28, 30) et la ou les secondes encoches (42) sont de forme oblongue, délimitées par deux parois sensiblement parallèles (34) reliées l'une à l'autre par un fond semi circulaire (36).

7. Dispositif de fixation selon une des revendications précédentes, **caractérisé en ce que** la ou les premières encoches (28, 30) débouchent sur le bord (32) de la première bride (18) du coté opposé au moteur.

8. Dispositif de fixation selon une des revendications précédentes, **caractérisé en ce que** la ou les secondes encoches (42) débouchent sur le bord (44) de deuxième bride (20) en regard du moteur.

9. Procédé de montage d'un turbocompresseur (14) sur un collecteur d'échappement (10) à l'aide d'un dispositif de fixation selon une des revendications 1 à 8, **caractérisé en ce qu'**il comporte les étapes suivantes :
- montage du collecteur d'échappement (10) sur la face d'échappement de la culasse du moteur ;
- positionnement d'un joint sur la face d'appui (24) de la bride d'entrée (20) du turbocompresseur (14) ;
- positionnement des écrous (54) sur les goujons (38, 50 et 52) de manière à ce que la distance restante entre la face d'appui de la bride de sortie (18) du collecteur (10), ou de la bride d'entrée (20) du turbocompresseur (14), et la face de l'écrou (54) en regard de la face d'appui soit supérieure à l'épaisseur de la bride d'entrée (20) du turbocompresseur (14) ou, respectivement, de la bride de sortie (18) du collecteur (10) ;
- positionnement du turbocompresseur (14) de manière à introduire simultanément la portion des goujons située entre les écrous (54) et la face d'appui (22, 24) des brides, dans les encoches (42, 28 et 30) ;
- serrage des écrous (54) pour assurer la fixation de la bride d'entrée (20) du turbocompresseur (14) contre la bride de sortie (18) du collecteur d'échappement (10).
